# EUROPEAN PATENT SPECIFICATION

(11) **EP 0 501 281 B1**
(45) Date of publication and mention of the grant of the patent: **20.11.1996**
(21) Application number: 92102665.4
(22) Date of filing: 18.02.1992
(51) Int. Cl.: F23J 15/00, B01D 53/04

(54) **Exhaust gas treating apparatus**
Apparat zur Abgasbehandlung
Dispositif de traitement de gaz d'échappement

(30) Priority: 22.02.1991 JP 50534/91
(43) Date of publication of application: 02.09.1992
(73) Proprietor: EBARA CORPORATION, Ohta-ku, Tokyo (JP)
(72) Inventor: Yoshida, Hiroshi, Yokohama-shi, Kanagawa-ken (JP); Kaneko, Mitsuyoshi, Machida-shi, Tokyo (JP); Ishikawa, Ryuichi, Ohta-ku, Tokyo (JP)
(74) Representative: Nöth, Heinz, Dipl.-Phys.

(56) References cited:
- EP-A- 0 188 853
- DE-A- 3 309 497
- GB-A- 2 050 194
- GB-A- 2 238 731
- US-A- 4 444 574
- US-A- 4 559 211
- PATENT ABSTRACTS OF JAPAN vol. 12, no. 82 (C-481) 15 March 1988 & JP-A-62 216 911 (WAKO PURE CHEM) 24 September 1987

## Description

The present invention relates to an exhaust gas treating apparatus wherein exhaust gas that is discharged from municipal refuse incineration equipment, industrial waste incineration equipment, etc. is passed through a filter to remove dust and reduce the amount of harmful substances, e.g., dioxin and NOₓ, contained in the exhaust gas.

Hitherto, a bag filter has been used as an exhaust gas treating device for reducing the amounts of dust and dioxin contained in exhaust gas that is discharged from municipal refuse incineration equipment, industrial waste incineration equipment, etc. This bag filter comprises, for example, a suspended cylindrical filter cloth which is used in such a way that an exhaust gas stream is passed through the cylindrical filter cloth from either the inner or outer side thereof and the purified exhaust gas is released from the other side.

In general, exhaust gas contains dust at a concentration of several tens of g/Nm³, but it is purified to a dust concentration of several tens of mg/Nm³ by being passed through a bag filter. The dust collected in this way is discharged by being cleared off the cloth of the bag filter. Examples of methods of clearing the collected dust include pulse jet cleaning, back washing, shaking, etc. Among them, the pulse jet cleaning method is commonly used for exhaust gas, treatment from the viewpoint of reliability and cost. The pulse jet cleaning method is carried out in such a manner that compressed air is blown into the bag filter from the purified gas side to strain and relax the filter cloth repeatedly, thereby clearing the dust from the filter cloth.

Exhaust gas from an incinerator is cooled by water spray in an exhaust gas cooler, sprayed with lime, and passed through a bag filter at 100°C to 200°C, thereby capturing dioxin in the bag filter.

It is also known that dioxin can be removed by passing the exhaust gas through an activated carbon filter. In addition, composite filters comprising a carbon fiber layer and a reinforcing filter medium, which are formed together in an integral structure, are disclosed as filter dust separators for high temperature in Japanese Patent Public Disclosure No. 61-28415 (1986) and Japanese Utility Model Public Disclosure No. 63-46922 (1988). In these filters, however, a high-temperature strength filter medium is provided on the back surface of a carbon fiber layer to reinforce the fiber layer, but no bag filter is employed.

The rate of dioxin removal by bag filters varies widely, i.e., from 80% to 99%, and it is considered possible to lower the dioxin concentration at the bag filter outlet to about 0.5 ng/Nm³. However, it is necessary in order to lower the dioxin concentration below this level to consider adopting an activated carbon filter or the like.

The activated carbon filter provides a high dioxin removal rate of about 99%, but the SV value (raw gas quantity / activated carbon quantity) is of the order of 400. Accordingly, employment of the activated carbon filter results in a considerable increase in the overall size of the exhaust gas treating apparatus, and a rise in the cost as well as an increase in the installation space.

The document EP-A-0 188 853 describes a device for cleaning air from a furnace. The device has an elongate casing with an inlet at one end for air to be cleaned and an outlet at the other end for cleaned air. A sand filter for removing tarry components, an air cooler for condensing water vapour, a dust filter and a chamber filter which is a chemical absorption filter are disposed in series in the above order with intermediate spacings, so as to extend across the inner cross-section of the casing. The dust filter may have the form of a bag filter or several bag filters arranged in parallel across the casing cross-section. The chamber filter is followed without any spacing by a second chamber filter of active carbon, both also extending across the casing cross-section. The active carbon filter is followed by a blower and a filter of micro-glass fibers.

The document DE-A-3 309 497 describes a gas filter having a casing with an inlet at the top end and an outlet at the bottom. A fine dust filter extends in the form of a layer across the inside cross-section of the casing, followed by a filter insert of active carbon. The filter insert disposed below the dust filter consists of several filter chambers containing granular carbon. The filter chambers are arranged in pairs, each having the form of a block or a plate of rectangular shape arranged to extend along the direction of gas flow, so as to provide a large surface area. The gas is conducted to the two outside surfaces of each pair of blocks and passed through the blocks to the intermediate space, from where it is drawn off through a blower and discharged to the outside.

In view of the above-described circumstances it is an object of the present invention to provide an exhaust gas treating apparatus, as specified in the preamble of claim 1, which is of compact design and provides a high rate of removal of dioxin and permits an effective removal of collected dust from the filter cloth.

According to the present invention this object is achieved with the features of the characterizing portion of claim 1.

The exhaust gas treating apparatus of the present invention compensates the low dioxin removal rate of the bag filter and eliminates the disadvantage of the activated carbon filter that the installation space is excessively large. It also enables denitrification of the exhaust gas by the addition of ammonia.

The present invention provides an exhaust gas treating apparatus including a bag filter having a filter cloth and a retainer that supports the filter cloth so that exhaust gas is passed through the bag filter to discharge purified exhaust gas, wherein an activated carbon filter is installed along the filter cloth of the bag filter at the exhaust gas outlet side of the bag filter.

As the activated carbon filter, a filter containing granulated activated carbon and/or activated carbon fiber may be employed. When an activated carbon filter containing granulated activated carbon is employed, it is preferable to provide a means for continuously or intermittently supplying and discharging activated carbon.

Examples of activated carbon fibers usable in the present invention are those which are obtained by carbonizing and activating a raw material such as coal, pitch, rayon, acrylic fiber, phenolic fiber, etc. by a proper method. These activated carbon fibers are also known as active carbon fibers, fibrous activated carbon, etc. The activated carbon fiber may be employed in the form of a cloth.

The bag filter has a filter cloth and a retainer that is provided at the exhaust gas outlet side to support the filter cloth. Preferably, the activated carbon filter is detachably installed in between the filter cloth and the retainer, or detachably provided as an integral part of the retainer. If the activated carbon filter comprises activated carbon fiber which is in the form of a cloth, it may be formed on the back surface of the filter cloth as an integral part thereof.

The exhaust gas treating apparatus of the present invention is capable of efficiently removing dioxin from exhaust gas, and it is therefore most effectively applied to treatment of exhaust gas discharged from municipal refuse or industrial waste incineration equipment.

If a means for spraying ammonia is provided in the exhaust gas passage at the upstream side of the bag filter, it is possible to effect denitrification of exhaust gas.

By virtue of the above-described arrangement, exhaust gas that is discharged from municipal refuse incineration equipment, industrial waste incineration equipment, etc. is passed through the filter cloth to remove dust therefrom and further passed through the activated carbon filter, thereby removing dioxin from the exhaust gas at a high removal rate. If the activated carbon filter is formed as an integral part of the filter cloth of the bag filter, dust and dioxin are simultaneously removed at a high removal rate by passing exhaust gas through the filter cloth. The same effect is produced also when the activated carbon filter is detachably provided as an integral part of the retainer of the bag filter or it is detachably provided in between the retainer and the filter cloth. In such a case, it is possible to replace only the activated carbon filter, and it is also possible to clean the filter cloth effectively by pulse jet for clearing the collected dust.

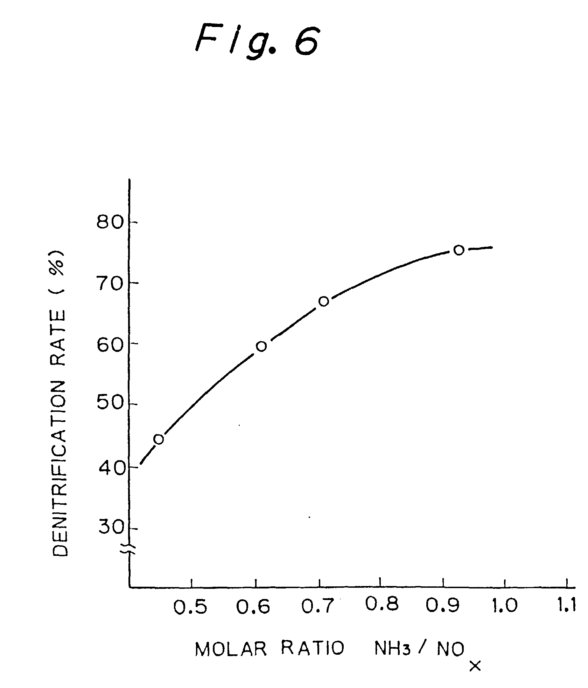

If ammonia is added to exhaust gas, denitrification of NOₓ can be effected by the catalytic action of activated carbon or activated carbon fiber. The relationship between the amount of ammonia added and the denitrification rate is shown in Fig. 6.

Utilization of activated carbon fiber of high adsorption efficiency enables a high removal rate to be obtained with a thinner layer than in the case of granulated activated carbon, so that it is possible to realize an exhaust gas treating apparatus which is compact and has a minimal pressure loss.

Since the pressure loss of activated carbon fiber is smaller than that of the filter cloth, pulse jet can be employed to clear the collected dust in the same way as in the case where no activated carbon fiber is used. When wrapped in a cloth, activated carbon fiber can be deformed in the same way as in the case of the filter cloth, so that the collected dust can be cleared by pulse jet. If activated carbon fiber is held by the retainer, the dust can be cleared off the filter cloth without deforming the activated carbon fiber.

The above and other objects, features and advantages of the present invention will become more apparent from the following description of the preferred embodiments thereof, taken in conjunction with the accompanying drawings, in which like reference numerals denote like elements, and of which:
Fig. 1 is a vertical sectional view schematically illustrating an example of the arrangement of the exhaust gas treating apparatus according to the present invention;
Fig. 2 is a vertical sectional view schematically illustrating a further example of the arrangement of the exhaust gas treating apparatus according to the present invention;
Fig. 3 is a fragmentary sectional view of an activated carbon filter employed in the present invention;
Fig. 4 is a fragmentary sectional view of one example of the bag filter employed in the present invention;
Fig. 5 is a fragmentary sectional view of another example of the bag filter employed in the present invention; and
Fig. 6 is a graph showing the change of the denitrification rate in accordance with the amount of ammonia added.

Embodiments of the present invention will be described below with reference to the accompanying drawings. It should be noted that the present invention is not necessarily limited to these embodiments.

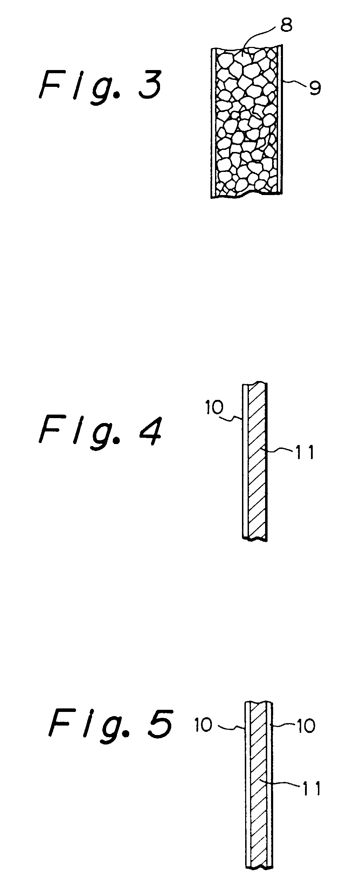

Fig. 3 shows schematically the activated carbon filter. As illustrated, the activated carbon filter comprises two support members 9 made of iron, stainless steel or fiber, and granulated activated carbon 8 packed in the space between the support members 9. Each support member 9 is arranged in the form of a mesh or formed with a large number of openings in order to enable exhaust gas to pass therethrough. The mesh size of the support members 9 is preferably larger than that of the filter cloth of the bag filter. As the activated carbon filter 2, activated carbon fiber formed in a plate-like shape may also be employed.

Although in Fig. 3 an activated carbon filter employing granulated activated carbon is exemplarily shown, this filter may be replaced with an arrangement in which activated carbon fiber 11 is bonded to the filter cloth 10 of the bag filter, as shown in Fig. 4, or an arrangement in which activated carbon fiber 11 is sandwiched between the filter cloths 10 of the bag filter, as shown in Fig. 5.

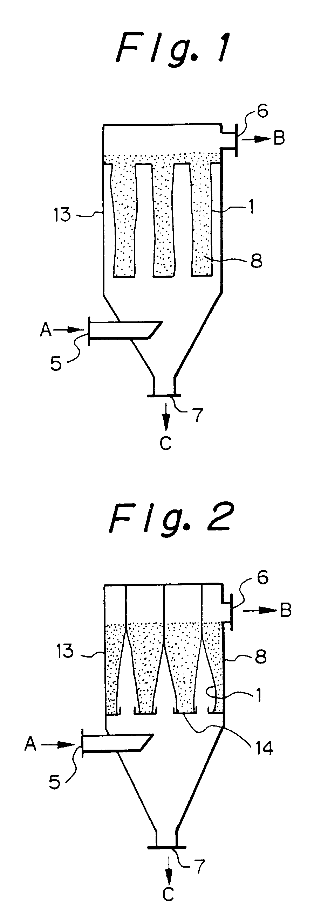

Fig. 1 is a vertical sectional view of an example of the exhaust gas treating apparatus according to the present invention. Bag-shaped filter cloths 1 are suspended inside a casing 13 that is formed in the shape of a cylinder with an inverted cone-shaped lower portion. The bag-shaped filter cloths 1 are packed with granulated activated carbon 8 to form an activated carbon filter. The casing 13 has an exhaust gas inlet port 5 provided in the lower portion thereof and an exhaust gas outlet port 6 provided in the upper portion thereof to discharge purified exhaust gas in the direction of arrow B. In addition, a dust discharge port 7 is provided in the lower end of the casing 13. Exhaust gas flowing into the casing 13 from the inlet port 5 passes through the filter cloths 1 to remove dust from the exhaust gas and subsequently passes through the granulated activated carbon 8, thereby removing harmful components such as dioxin. The purified exhaust gas is discharged from the outlet port 6.

Referring to Fig. 2 which is a vertical sectional view of a further example of the exhaust gas treating apparatus according to the present invention, filter cloths 1 are suspended from the ceiling of the casing 13. Bottom openings defined between the filter cloths 1 are closed with bottom lids 14, respectively, and the spaces defined between the filter cloths 1 are packed with granulated activated carbon 8, thereby forming an activated carbon filter. The arrangements of the other elements are substantially the same as those of the exhaust gas treating apparatus shown in Fig. 1.

In the exhaust gas treating apparatuses shown in Figs. 1 and 2, the pulse air method cannot be employed for cleaning the filter cloths 1 because they are packed with the activated carbon 8. Therefore, back airflow or mechanical shaking is employed. Dust that is removed by cleaning is discharged from the dust discharge port 7 in the direction of arrow C. It has been confirmed that the lifetime of activated carbon is 4,000 hours or more at present. Accordingly, the activated carbon 8 is changed at the time of routine inspection which is made twice a year in general.

Thus, according to the present invention, the activated carbon filter is disposed at the purified exhaust gas outlet side of the filter cloth of the bag filter. Accordingly, dioxin in the exhaust gas can be removed by the activated carbon in the filter at high efficiency. Thus, it is possible to provide an exhaust gas treating apparatus which is compact and provides a high dioxin removal rate and which also enables denitrification by adding ammonia to the exhaust gas at a position upstream of the bag filter.

## Claims

1. An exhaust gas treating apparatus including a bag filter having a filter cloth (1) to remove dust from the exhaust gas, a retainer that supports said filter cloth (1) so that exhaust gas is passed through said bag filter to discharge purified exhaust gas, and an activated carbon filter installed along said filter cloth (1) of said bag filter at the exhaust gas outlet side of said bag filter,
characterized in that the filter cloth (1) is suspended inside a casing (13) and packed with activated carbon (8) to form the activated carbon filter, and that the casing (13) has an exhaust gas inlet port (5) provided in the lower portion thereof, an exhaust gas outlet port (6) provided in the upper portion thereof, and a dust discharge port (7) provided in the lower end of the casing (13).

2. An exhaust gas treating apparatus according to claim 1, characterized in that said activated carbon (8) consists of granulated activated carbon and/or activated carbon fibre.

3. An exhaust gas treating apparatus according to claim 1, characterized in that bottom openings of the bag-shaped filter cloths (1) are closed with bottom lids (14).

4. An exhaust gas treating apparatus according to any one of claims 1 to 3, including ammonia spray means provided in an exhaust gas passage at the inlet side of said bag filter.

5. Use of the exhaust gas treating apparatus according to any one of claims 1 to 4 for treating combustion gas from municipal refuse or industrial waste incineration equipment.

## Patentansprüche

1. Vorrichtung zur Abgasbehandlung, die einen Beutelfilter mit einem Filtertuch (1) zum Entfernen von Staub aus Abgas, eine Halterung, die das Filtertuch (1) hält, so daß Abgas durch den Beutelfilter hindurchströmt, um gereinigtes Abgas ausströmen zu lassen und einen entlang des Filtertuchs (1) des Beutelfilters an der Abgasauslaßseite des Beutelfilters angebrachten Aktivkohlefilter, umfaßt,
dadurch gekennzeichnet, daß das Filtertuch (1) in einem Gehäuse (13) aufgehängt und mit Aktivkohle (8) gepackt ist, um den Aktivkohlefilter zu bilden, und daß das Gehäuse (13) eine im unteren Bereich vorgesehene Abgaseinlaßöffnung (5) und eine im oberen Bereich vorgesehene Abgasauslaßöffnung (6) sowie eine im unteren Ende des Gehäuses (13) vorgesehene Staubentfernungsöffnung (7) besitzt.

2. Vorrichtung zur Abgasbehandlung nach Anspruch 1, dadurch gekennzeichnet, daß die Aktivkohle (8) aus granulierter Aktivkohle und/oder Aktivkohlefaser besteht.

3. Vorrichtung zur Abgasbehandlung nach Anspruch 1, dadurch gekennzeichnet, daß die unteren Öffnungen des beutelförmigen Filtertuchs (1) mit unteren Deckeln (14) verschlossen sind.

4. Vorrichtung zur Abgasbehandlung nach irgendeinem der Ansprüche 1 bis 3, die in einem Abgasdurchlaß auf der Einlaßseite des Beutelfilters vorgesehene Mittel zum Versprühen von Ammoniak umfaßt.

5. Verwendung der Vorrichtung zur Abgasbehandlung nach irgendeinem der Ansprüche 1 bis 4 zur Behandlung von Verbrennungsgas aus städtischen Müll- oder industriellen Abfallverbrennungs-Anlagen.

## Revendications

1. Dispositif de traitement de gaz d'échappement, comprenant un filtre à sacs possédant un tissu filtrant (1) destiné à éliminer les poussières du gaz d'échappement, un organe de retenue qui supporte ledit tissu filtrant (1) de telle manière que le gaz d'échappement passe à travers ledit sac filtrant pour rejeter du gaz d'échappement épuré, et un filtre à charbon actif monté le long dudit tissu filtrant (1) dudit filtre à sacs, sur le côté de sortie du gaz d'échappement dudit filtre à sacs,
caractérisé en ce que le tissu filtrant (1) est suspendu à l'intérieur d'un boîtier (13) et garni de charbon actif (8) pour former le filtre à charbon actif, et en ce que le boîtier (13) présente un orifice (5) d'entrée du gaz d'échappement prévu dans sa portion inférieure, un orifice (6) de sortie du gaz d'échappement, prévu dans sa portion supérieure, et un orifice (7) de déchargement des poussières prévu dans l'extrémité inférieure du boîtier (13).

2. Dispositif de traitement de gaz d'échappement selon la revendication 1, caractérisé en ce que ledit charbon actif (8) est constitué par du charbon actif granulé et/ou de la fibre de charbon actif.

3. Dispositif de traitement de gaz d'échappement selon la revendication 1, caractérisé en ce que des ouvertures de fond des tissus filtrants (1) mis en forme de sacs sont fermées par des couvercles de fond (14).

4. Dispositif de traitement de gaz d'échappement selon une quelconque des revendications 1 à 3, comprenant des moyens de pulvérisation d'ammoniac prévus dans un passage de gaz d'échappement sur le côté d'entrée dudit filtre à sacs.

5. Utilisation du dispositif de traitement de gaz d'échappement selon une quelconque des revendications 1 à 4, pour traiter des gaz de combustion issus d'un équipement d'incinération de déchets urbains ou de déchets industriels.
